(19) Europäisches Patentamt / European Patent Office / Office européen des brevets

(11) **EP 4 058 628 B1**

(12) **FASCICULE DE BREVET EUROPEEN**

(45) Date de publication et mention de la délivrance du brevet:
**03.01.2024   Bulletin 2024/01**

(21) Numéro de dépôt: **20817461.5**

(22) Date de dépôt: **05.11.2020**

(51) Classification Internationale des Brevets (IPC):
**D07B 1/06** *(2006.01)*      **D07B 1/16** *(2006.01)*

(52) Classification Coopérative des Brevets (CPC):
(C-Sets disponibles)
**D07B 1/0613; B29D 30/38; B60C 9/0007;**
**B60C 9/20; D07B 1/165;** B29D 2030/383;
B60C 2009/2067; B60C 2009/2096;
B60C 2200/065; D07B 1/0626; D07B 2201/1032;
D07B 2201/202; D07B 2201/2029;
D07B 2201/2031; D07B 2201/2051;      (Cont.)

(86) Numéro de dépôt international:
**PCT/FR2020/051997**

(87) Numéro de publication internationale:
**WO 2021/094676 (20.05.2021 Gazette 2021/20)**

(54) **CÂBLE MULTI-TORONS À DEUX COUCHES AVEC COUCHE INTERNE GAINÉE À RENDEMENT AMÉLIORÉ**

ZWEISCHICHTIGES MEHRADRIGES KABEL, DAS EINE UMMANTELTE INNENSCHICHT UND VERBESSERTE LEISTUNG AUFWEIST

TWO-LAYER MULTI-STRAND CABLE HAVING A SHEATHED INNER LAYER AND AN IMPROVED PERFORMANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2019   FR 1912768**

(43) Date de publication de la demande:
**21.09.2022   Bulletin 2022/38**

(73) Titulaire: **COMPAGNIE GENERALE DES ETABLISSEMENTS MICHELIN**
**63000 Clermont-Ferrand (FR)**

(72) Inventeur: **GIANETTI, Alexandre**
**63040 Clermont-Ferrand Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
CN-A- 107 905 008      JP-A- 2008 285 785
US-B1- 6 412 264

• Roland Verreet: "Stahldrahtseile f?r Krane", , 1 janvier 2004 (2004-01-01), XP055269147, Internet Article Extrait de l'Internet: URL:http://www.casar.de/De/Technik2/Broschuren [extrait le 2016-04-28]

(52) Classification Coopérative des Brevets (CPC):
(Cont.)
D07B 2201/2061; D07B 2201/2065;
D07B 2201/2074

C-Sets
D07B 2201/2051, D07B 2801/24;
D07B 2201/2061, D07B 2801/12, D07B 2801/24;
D07B 2201/2065, D07B 2801/24

## Description

L'invention concerne les câbles multi-torons utilisables notamment pour le renforcement de pneumatiques, particulièrement de pneumatiques pour véhicules industriels lourds.

Un pneumatique à armature de carcasse radiale comprend une bande de roulement, deux bourrelets inextensibles, deux flancs reliant les bourrelets à la bande de roulement et une ceinture, ou armature de sommet, disposée circonférentiellement entre l'armature de carcasse et la bande de roulement. Cette armature de sommet comprend plusieurs armatures aux fonctions différentes.

L'armature de sommet comprend généralement une armature de travail comprenant deux nappes de travail, ou nappes croisées, comprenant des éléments filaires de renfort métalliques de travail agencés les uns sensiblement parallèlement aux autres dans chaque nappe de travail, mais croisés d'une nappe à l'autre, c'est-à-dire inclinés, symétriquement ou non, par rapport au plan circonférentiel médian, d'un angle allant généralement de 15° et 40°. Cette armature de travail permet, entre autres fonctions, la transmission au moins partielle des efforts transversaux exercés par le sol sur le pneumatique lors du roulage de ce dernier afin d'assurer la directionalité du pneumatique, c'est-à-dire la capacité du pneumatique à permettre au véhicule sur lequel il est monté de tourner.

On connait de l'état de la technique un élément de renfort de nappe de travail comprenant un câble métallique multi-torons à deux couches tel que divulgué dans les exemples de WO2016051669. Ce câble comprend une couche interne du câble constituée d'un toron interne et une couche externe du câble constituée de sept torons externes enroulés en hélice autour de la couche interne du câble. Le toron interne comprend une couche interne du toron constituée de deux fils métalliques interne et une couche externe du toron constituée de neuf fils métalliques externes. Et chaque toron externe comprend une couche interne du toron constituée de trois fils métalliques interne et une couche externe du toron constituée de huit fils métalliques externes.

Dans WO2016051669, l'objectif est de fournir des éléments filaires de renfort de travail présentant une rigidité et une force à rupture aussi élevées que possible afin d'éviter les dégâts causés sur l'armature de sommet, et notamment sur l'armature de travail, par les obstacles rencontrés par le pneumatique lors de son roulage. Dans WO2016051669, cet objectif est atteint lorsque le diamètre des fils métalliques externes de la couche est supérieur au diamètre des fils métalliques internes de la couche interne.

Ainsi, dans WO2016051669, l'objectif est de lutter contre la déformation imposée par les obstacles rencontrés en leur opposant des câbles les plus rigides et mécaniquement les plus résistants.

Toutefois, si cette solution est efficace contre des obstacles de dimensions relativement petites ou moyennes, elle s'avère inefficace à l'égard des obstacles de dimensions plus grandes. En effet, dans ces cas, les efforts exercés sur les câbles sont supérieurs à la dureté de l'acier et l'obstacle vient alors cisailler les câbles.

L'invention a pour but un câble avec un rendement amélioré permettant d'éviter les dégâts causés par les obstacles sollicitant fortement l'armature de sommet, notamment l'armature travail du pneumatique.

## CABLE SELON L'INVENTION

A cet effet, l'invention a pour objet un câble multi-torons à deux couches comprenant :

- une couche interne du câble constituée de $K \geq 1$ toron(s) interne(s) , le ou chaque toron interne étant à deux couches et comprenant :
- une couche interne constituée de Q fils métalliques internes , et
- une couche externe constituée de N fils métalliques externes enroulés autour de la couche interne ,
- une couche externe du câble constituée de L>1 torons externes enroulés autour de la couche interne du câble, chaque toron externe étant à deux couches et comprenant :
- une couche interne constituée de Q' fils métalliques internes , et
- une couche externe constituée de N' fils métalliques externes enroulés autour de la couche interne ,

dans lequel :

- le câble est obtenu par un procédé comprenant une étape de fabrication de la couche interne gainée dans laquelle on entoure la couche interne d'une composition élastomérique présentant une épaisseur G puis des L torons externes pour former la couche externe, avec L étant strictement supérieur à Lmax qui est le nombre maximum de torons externes pouvant être disposés sur la couche externe théorique obtenue lorsque la couche interne est directement au contact de la couche externe théorique.

Tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

Dans l'invention, le câble est à deux couches de torons, c'est-à-dire qu'il comprend un assemblage constitué de deux couches de torons, ni plus ni moins, c'est-à-dire que l'assemblage a deux couches de torons, pas une, pas trois, mais uniquement deux.

La couche interne du câble est entourée d'une composition élastomérique présentant une épaisseur G puis elle est entourée d'une couche externe.

Par directement au contact de la couche externe théorique, on entend qu'aucune gaine n'est agencée entre la couche interne et la couche externe théorique. La couche externe est ainsi disposée au plus près du centre dans lequel la couche interne est circonscrite.

Par composition d'élastomère ou composition élastomérique, on entend que la composition comprend au moins un élastomère ou un caoutchouc (les deux termes étant synonymes) et au moins un autre composant.

Le nombre maximum de torons externes présentant un diamètre D2 pouvant être disposés sur la couche externe théorique présentant un rayon d'hélice Rt et un angle d'hélice $\alpha t$ obtenu lorsque la couche interne est directement au contact de la couche externe théorique, ci-désigné par Lmax est défini par la formule suivante:

$$Lmax=EN(\pi/ \arctan[(D2/2)^2/((Rt^2-(D2/2)^2) \times \cos^2\alpha t))]^{1/2})$$

avec, par définition, EN est la valeur entière de la formule entre parenthèse, le rayon d'hélice Rt de la couche externe théorique du câble est le rayon du cercle théorique passant par les centres des torons externes de la couche externe théorique dans un plan perpendiculaire à l'axe du câble et le diamètre d'un toron est le diamètre du cercle le plus petit dans lequel est circonscrit le toron.

L'angle d'hélice $\alpha t$ est une grandeur bien connue de l'homme du métier et peut être déterminé par le calcul suivant $\alpha t=\text{Arctan}[2\pi \times Rt/P]$, formule dans laquelle P est le pas exprimé en millimètres auquel chaque élément filaire métallique est enroulé et Rt est le rayon d'hélice de la couche externe théorique du câble exprimée en millimètres et Arctan désignant la fonction arctangente.

Contrairement à l'état de la technique dans lequel les câbles présentent un L=Lmax, le câble selon l'invention présente L> Lmax torons permettant ainsi d'augmenter la force à rupture du câble par l'ajout d'au moins un toron supplémentaire. Les inventeurs à l'origine de l'invention émettent l'hypothèse que la présence de la gaine permet d'une part de créer une voûte suffisante autour de la couche interne permettant d'ajouter un toron supplémentaire et d'autre part de soulager les pressions de contact par un effet coussin entre la couche interne et la couche externe améliorant de ce fait le rendement de chacun des torons du câble.

Avantageusement, le ou chaque toron interne est à couches cylindriques.

Avantageusement, chaque toron externe est à couches cylindriques.

De façon très avantageuse, le ou chaque toron interne et chaque toron externe sont à couches cylindriques. On rappelle que de telles couches cylindriques sont obtenues lorsque les différentes couches d'un toron sont enroulées à des pas différents et/ou lorsque les sens d'enroulement de ces couches sont distincts d'une couche à l'autre. Un toron à couches cylindriques est très fortement pénétrable contrairement à un toron à couches compactes dans lequel les pas de toutes les couches sont égaux et les sens d'enroulement de toutes les couches sont identiques et présente une pénétrabilité bien plus faible.

On rappelle que, de manière connue, le pas d'un toron représente la longueur de ce toron, mesurée parallèlement à l'axe du câble, au bout de laquelle le toron ayant ce pas effectue un tour complet autour dudit axe du câble. De façon analogue, le pas d'un fil représente la longueur de ce fil, mesurée parallèlement à l'axe du toron dans lequel il se trouve, au bout de laquelle le fil ayant ce pas effectue un tour complet autour dudit axe du toron.

Par sens d'enroulement d'une couche de torons ou de fils, on entend le sens formé par les torons ou les fils par rapport à l'axe du câble ou du toron. Le sens d'enroulement est communément désigné par la lettre soit Z, soit S.

Les pas, sens d'enroulement et diamètres des fils et des torons sont déterminés conformément à la norme ASTM D2969-04 de 2014.

De préférence, les torons ne subissent pas de préformation.

Avantageusement, le câble est métallique. Par câble métallique, on entend par définition un câble formé de fils constitués majoritairement (c'est-à-dire pour plus de 50% de ces fils) ou intégralement (pour 100% des fils) d'un matériau métallique. Un tel câble métallique est préférentiellement mis en oeuvre avec un câble en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages.

Lorsqu'un acier au carbone est avantageusement utilisé, sa teneur en carbone (% en poids d'acier) est de préférence comprise entre 0,05% et 1,2%, notamment entre 0,4% et 1,1%; ces teneurs représentent un bon compromis entre les propriétés mécaniques requises pour le pneumatique et la faisabilité des fils.

Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc.

De préférence, les fils d'une même couche d'un toron prédéterminé (interne ou externe) présentent tous sensiblement le même diamètre. Avantageusement, les torons externes présentent tous sensiblement le même diamètre. Par « sensiblement le même diamètre», on entend que les fils ou les torons ont le même diamètre aux tolérances industrielles près.

Avantageusement, les torons externes sont enroulés en hélice autour du toron interne selon un pas allant de 40 mm à 100 mm et de préférence allant de 50 mm à 90 mm.

Avantageusement, L= Lmax+1 ou L= Lmax+2 et de préférence L= Lmax+1. Afin de limiter le diamètre externe du câble, l'homme du métier saura adapter l'épaisseur G de composition élastomérique nécessaire à un bon compromis pression de contact et force à rupture améliorée. La couche externe comprend un nombre relativement élevé de torons externes et donc présente une force à rupture relativement élevée.

Avantageusement, le rapport du diamètre D1 du ou des torons internes sur le diamètre D2 de chaque toron externe va de 0,9 à 1,2.

Avantageusement, le diamètre D1 du ou de chaque toron interne est égal au diamètre D2 de chaque toron externe. Ainsi, on utilise préférentiellement le même diamètre pour le ou les toron(s) interne(s) et pour les torons externes ce qui limite le nombre de diamètres différents à gérer lors de la fabrication du câble.

Avantageusement, la couche externe du câble est saturée de sorte que la distance inter-torons des torons externes soit inférieure strictement à 20 $\mu$m.

Par définition, une couche de câble saturée est telle que la distance inter-torons des torons externes est inférieure strictement à 20 $\mu$m. La distance inter-torons de la couche externe de torons externes est définie, sur une section du câble perpendiculaire à l'axe principal du câble, comme la distance la plus courte qui sépare, en moyenne, les enveloppes circulaires dans lesquelles sont inscrits deux torons externes adjacents. Ainsi, cette construction du câble permet d'assurer une bonne stabilité architecturale de la couche externe et la saturation de la couche externe permet de s'assurer que la couche externe comprend un nombre relativement élevé de torons externes et donc présente une force à rupture relativement élevée.

Par opposition, une couche de câble désaturée est telle que la distance inter-torons des torons externes est supérieure ou égale à 20 $\mu$m.

Avantageusement, l'épaisseur G de la gaine de composition élastomérique est est strictement supérieure à 0 mm, de préférence supérieure ou égale à 0,04 mm et plus préférentiellement supérieure ou égale à 0,12 mm. Plus l'épaisseur G de la composition élastomérique est importante, plus on peut rajouter de torons sur la couche externe.

Avantageusement, l'épaisseur G de la gaine de composition élastomérique est inférieure ou égale à 0,80 mm, de préférence inférieure ou égale à 0,60 mm et plus préférentiellement inférieure ou égale à 0,52 mm. Cette épaisseur permet d'optimiser le nombre relativement élevé de torons externes et donc d'avoir une force à rupture relativement élevée tout en limitant le diamètre externe du câble.

Avantageusement, la composition élastomérique comprend un élastomère choisi dans le groupe constitué par les polybutadiènes, le caoutchouc naturel, les polyisoprènes de synthèse, les copolymères de butadiène, les copolymères d'isoprène, et les mélanges de ces élastomères.

De préférence, la composition élastomérique comprend un élastomère choisi dans le groupe constitué par le caoutchouc naturel, les polyisoprènes de synthèse, les copolymères d'isoprène, et les mélanges de ces élastomères.

De préférence, la composition d'élastomère comprend également un système de vulcanisation, une charge. Plus préférentiellement, l'élastomère est diénique.

De préférence, la composition élastomérique comprend du noir de carbone à titre de charge renforçante.

Avantageusement, K=1, 2, 3 ou 4, de préférence K=1, 2 ou 3 et plus préférentiellement K=1 ou 2.

Avantageusement, les câbles selon l'invention présentent une architecture dans laquelle K=1, 2, 3 ou 4, on distingue deux variantes :

- cas dans lequel K=2, 3 ou 4 : les efforts transversaux les plus sévères qui s'exercent dans le câble lorsque celui-ci est mis en tension sont les efforts transversaux s'exerçant entre les torons internes ;
- cas dans lequel K=1 : les efforts transversaux les plus sévères sont les efforts transversaux exercés par les torons externes sur le toron interne.

Dans l'état de la technique, on connait des câbles présentant une architecture dans laquelle K>1 et comprenant un nombre de torons externes tels que la couche externe du câble soit saturée de façon à maximiser la force à rupture en ajoutant un nombre maximal de torons externes. Ici, pour le câble selon l'invention présentant une architecture dans laquelle K>1 ,grâce à la formation d'un coussin de composition d'élastomère absorbant au moins partiellement les efforts transversaux s'exerçant entre les torons internes, le câble présente une force à rupture nettement améliorée.

De la même façon, pour le câble selon l'invention présentant une architecture dans laquelle K=1, grâce à la formation d'un coussin de composition d'élastomère absorbant au moins partiellement les efforts transversaux s'exerçant par les torons externes sur le toron interne, le câble présente une force à rupture nettement améliorée par rapport au câble de l'état de la technique sans gaine autour de la couche interne.

Avantageusement, L=7, 9 ,10 ou 11, de préférence L=7, 9 ou 10 et plus préférentiellement L=7 ou 10.

Dans une première variante, K=1 et L=7. Dans le câble dans lequel K=1, les efforts transversaux les plus sévères sont les efforts transversaux exercés par les torons externes sur le toron interne. Ici la présence de la composition élastomérique va permettre de soulager les pressions de contact vers le toron interne tout en assurant un bon rendement du fait de la présence d'un toron externe supplémentaire.

Dans une deuxième variante, K=2 et L=10. Dans ce câble, les efforts transversaux s'exerçant entre les deux torons internes sont absorbés par la gaine et le câble présente une force à rupture améliorée du fait de la présence d'un toron externe supplémentaire tout en limitant son diamètre externe.

Dans une troisième variante, K=3 et L=10. De la même façon que dans la deuxième variante, le câble présente une force à rupture améliorée du fait de la présence d'un toron externe supplémentaire.

Dans une quatrième variante, K=4 et L=11. De la même façon que dans la deuxième variante, le câble présente une force à rupture améliorée du fait de la présence d'un toron externe supplémentaire.

De préférence, la couche externe de chaque toron interne est désaturée de sorte que la distance interfils I3 soit supérieure ou égale à 5 $\mu$m.

Par définition, une couche désaturée est telle qu'il existe suffisamment d'espace entre les fils de façon à permettre le passage d'une composition polymérique, de préférence élastomérique. Une couche est désaturée signifie que les fils ne se touchent pas et qu'il y a suffisamment d'espace entre deux fils adjacents permettant le passage d'une composition polymérique, de préférence élastomérique, jusque dans la voûte. Par opposition, une couche saturée est telle qu'il n'existe suffisamment pas d'espace entre les fils de la couche de façon à permettre le passage d'une composition polymérique, de préférence élastomérique, par exemple car les fils de la couche se touchent deux à deux.

Avantageusement, la distance interfils de la couche externe de chaque toron interne est supérieure ou égale à 5 $\mu$m. De préférence, la distance interfils de la couche externe de chaque toron interne est supérieure ou égale à 15 $\mu$m, plus préférentiellement supérieure ou égale à 35 $\mu$m, encore plus préférentiellement supérieure ou égale à 50 $\mu$m et très préférentiellement supérieure ou égale à 60 $\mu$m. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme des distances interfils par le nombre d'espaces séparant les fils de la couche.

Avantageusement, la somme SI3 des distances interfils I3 de la couche externe est supérieure au diamètre d3 des fils externe de la couche externe.

De préférence, la distance interfils de la couche externe de chaque toron est inférieure ou égale à 100$\mu$m.

Par opposition, une couche saturée de torons est telle qu'il n'existe pas suffisamment d'espace entre les fils métalliques de façon à permettre le passage d'une composition d'élastomère non réticulée. En d'autres termes, une couche saturée de fils est telle que la distance interfils est inférieure à 5 $\mu$m.

De préférence, la couche externe de chaque toron externe est désaturée de sorte que la distance interfils I3' soit supérieure ou égale à 5 $\mu$m.

Avantageusement, la distance interfils de la couche externe de chaque toron externe est supérieure ou égale à 5 $\mu$m. De préférence, la distance interfils de la couche externe de chaque toron externe est supérieure ou égale à 15 $\mu$m, plus préférentiellement supérieure ou égale à 35 $\mu$m, encore plus préférentiellement supérieure ou égale à 50 $\mu$m et très préférentiellement supérieure ou égale à 60 $\mu$m.

De préférence, la distance interfils de la couche externe de chaque toron externe est inférieure ou égale à 100$\mu$m.

Avantageusement, la somme SI3' des distances interfils I3' de la couche externe est supérieure ou égale au diamètre d3' des fils externes de la couche externe.

Toron interne du câble selon l'invention

Avantageusement, Q=1, 2, 3 ou 4, de préférence Q=2, 3 ou 4.

Avantageusement, N= 5, 6, 7, 8, 9 ou 10.

Dans une première variante, Q=1 et N= 5 ou 6, de préférence Q=1, N=5.

Dans une deuxième variante, Q=2 et N=7 ou 8, de préférence Q=2, N=7.

Dans une troisième variante, Q=3 et N=7, 8 ou 9, de préférence Q=3, N=8.

Dans une quatrième variante, Q=4 et N=7, 8,9 ou 10, de préférence Q=4, N=9.

Très avantageusement, chaque fil interne du toron interne présente un diamètre d1 égal au diamètre d3 de chaque fil externe du toron interne. Ainsi, on utilise préférentiellement le même diamètre de fil sur les couches interne et externe du toron interne ce qui limite le nombre de fils différents à gérer lors de la fabrication du câble.

Toron externe du câble selon l'invention

Avantageusement, Q'=1, 2, 3 ou 4, de préférence Q'=2, 3 ou 4.
Avantageusement, N'= 5, 6, 7, 8, 9 ou 10.
Dans une première variante, Q'=1 et N'= 5 ou 6, de préférence Q'=1, N'=5.
Dans une deuxième variante, Q'=2 et N'=7 ou 8, de préférence Q'=2, N'=7.
Dans une troisième variante, Q'=3 et N'=7, 8 ou 9, de préférence Q'=3, N'=8.
Dans une quatrième variante, Q'=4 et N'=7, 8, 9 ou 10, de préférence Q'=4, N'=9.
Très avantageusement, chaque fil interne du toron externe présente un diamètre d1' égal au diamètre d3' de chaque fil externe du toron externe. Ainsi, on utilise préférentiellement le même diamètre de fil sur les couches interne et externe du toron externe ce qui limite le nombre de fils différents à gérer lors de la fabrication du câble.
Avantageusement,

- Q=3 et N=8,
- chaque fil métallique interne (F1) du ou de chaque toron interne (TI) présente un diamètre d1 égal au diamètre d3 de chaque fil externe (F3) du ou de chaque toron interne (TI),
- Q'= 3 et N'=8,
- chaque fil métallique interne (F1') de chaque toron externe (TE) présente un diamètre d1' égal au diamètre d3' de chaque fil externe (F3') de chaque toron externe (TE), et
- d1=d3=d1'=d3'.

Avantageusement, chaque fil métallique présente respectivement un diamètre d1, d1', d3, d3' allant de 0,10 mm à 0,60 mm, de préférence de 0,12 mm à 0,50 mm et plus préférentiellement de 0,15 mm à 0,42 mm.

## PRODUIT RENFORCE SELON L'INVENTION

Un autre objet de l'invention est un produit renforcé comprenant une matrice élastomérique et au moins un câble tel que défini ci-dessus.
Avantageusement, le produit renforcé comprend un ou plusieurs câbles selon l'invention noyés dans la matrice élastomérique, et dans le cas de plusieurs câbles, les câbles sont agencés côte à côte selon une direction principale.

## PNEUMATIQUE SELON L'INVENTION

Un autre objet de l'invention est un pneumatique comprenant au moins un câble ou un produit renforcé tel que définis ci-dessus.
De préférence, le pneumatique comporte une armature de carcasse ancrée dans deux bourrelets et surmontée radialement par une armature de sommet elle-même surmontée d'une bande de roulement, l'armature de sommet étant réunie auxdits bourrelets par deux flancs et comportant au moins un câble tel que défini ci-dessus.
Dans un mode de réalisation préféré, l'armature de sommet comprend une armature de protection et une armature de travail, l'armature de travail comprenant au moins un câble tel que défini ci-dessus, l'armature de protection étant radialement intercalée entre la bande de roulement et l'armature de travail.
Le câble est tout particulièrement destiné à des véhicules industriels choisis parmi des véhicules lourds tels que "Poids lourd" - i.e., métro, bus, engins de transport routier (camions, tracteurs, remorques), véhicules hors-la-route -, engins agricoles ou de génie civil, autres véhicules de transport ou de manutention.
De manière préférentielle, le pneumatique est pour véhicule de type génie civil. Ainsi, le pneumatique présente une dimension dans laquelle le diamètre, en pouces, du siège de la jante sur laquelle le pneumatique est destiné à être monté est supérieur ou égal à 40 pouces.
L'invention sera mieux comprise à la lecture des exemples qui vont suivre, donnés uniquement à titre d'exemples non limitatifs et faite en se référant aux dessins dans lesquels :

- la figure 1 est une vue en coupe perpendiculaire à la direction circonférentielle d'un pneumatique selon l'invention ;
- la figure 2 est une vue de détails de la zone II de la figure 1 ;
- la figure 3 est une vue en coupe d'un produit renforcé selon l'invention ;
- la figure 4 est une vue schématique en coupe perpendiculaire à l'axe du câble (supposé rectiligne et au repos) d'un câble (50) selon un premier mode de réalisation de l'invention ;

- la figure 5 est une vue analogue à celle de la figure 4 d'un câble (60) selon un deuxième mode de réalisation l'invention ;
- la figure 6 est une vue analogue à celle de la figure 4 d'un câble (70) selon un troisième mode de réalisation de l'invention ;
- la figure 7 est une vue analogue à celle de la figure 4 d'un câble (80) selon un quatrième mode de réalisation de l'invention ; et
- la figure 8 est une photographie d'un câble (50) selon un premier mode de réalisation de l'invention.

## EXEMPLE DE PNEUMATIQUE SELON L'INVENTION

Dans les figures, on a représenté un repère X, Y, Z correspondant aux orientations habituelles respectivement axiale (X), radiale (Y) et circonférentielle (Z) d'un pneumatique.

Le « plan circonférentiel médian » M du pneumatique est le plan qui est normal à l'axe de rotation du pneumatique et qui se situe à équidistance des structures annulaires de renfort de chaque bourrelet.

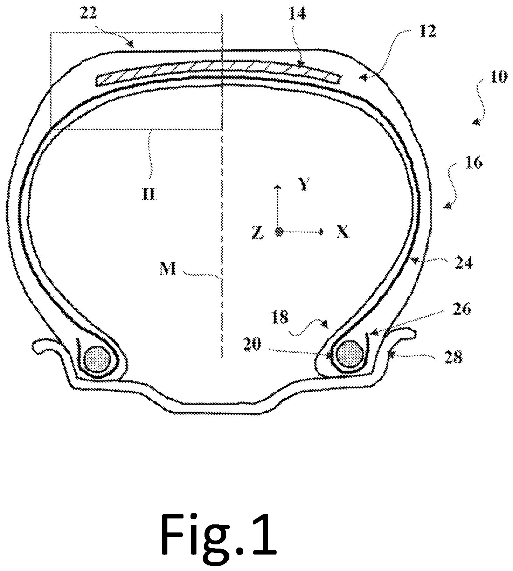

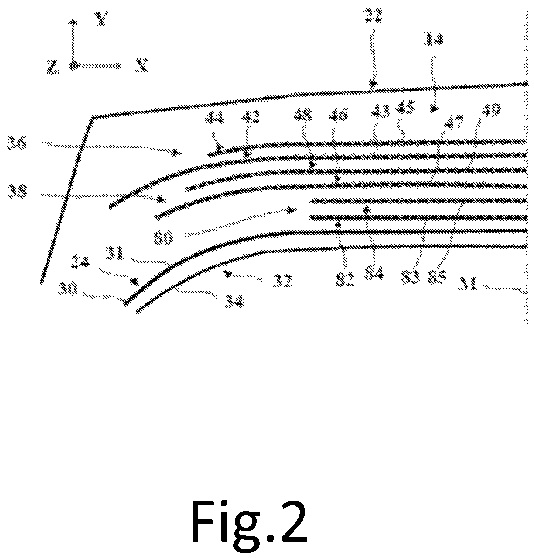

On a représenté sur les figures 1 et 2 un pneumatique selon l'invention et désigné par la référence générale 10.

Le pneumatique 10 est pour véhicule lourd de type génie civil, par exemple de type « dumper ». Ainsi, le pneumatique 10 présente une dimension de type 53/80R63.

Le pneumatique 10 comporte un sommet 12 renforcé par une armature de sommet 14, deux flancs 16 et deux bourrelets 18, chacun de ces bourrelets 18 étant renforcé avec une structure annulaire, ici une tringle 20. L'armature de sommet 14 est surmontée radialement d'une bande de roulement 22 et réunie aux bourrelets 18 par les flancs 16. Une armature de carcasse 24 est ancrée dans les deux bourrelets 18, et est ici enroulée autour des deux tringles 20 et comprend un retournement 26 disposé vers l'extérieur du pneumatique 20 qui est ici représenté monté sur une jante 28. L'armature de carcasse 24 est surmontée radialement par l'armature de sommet 14.

L'armature de carcasse 24 comprend au moins une nappe de carcasse 30 renforcée par des câbles de carcasse radiaux (non représentés). Les câbles de carcasse sont agencés sensiblement parallèlement les uns aux autres et s'étendent d'un bourrelet 18 à l'autre de manière à former un angle compris entre 80° et 90° avec le plan circonférentiel médian M (plan perpendiculaire à l'axe de rotation du pneumatique qui est situé à mi-distance des deux bourrelets 18 et passe par le milieu de l'armature de sommet 14).

Le pneumatique 10 comprend également une nappe d'étanchéité 32 constituée d'un élastomère (communément appelée gomme intérieure) qui définit la face radialement interne 34 du pneumatique 10 et qui est destinée à protéger la nappe de carcasse 30 de la diffusion d'air provenant de l'espace intérieur au pneumatique 10.

L'armature de sommet 14 comprend, radialement de l'extérieur vers l'intérieur du pneumatique 10, une armature de protection 36 agencée radialement à l'intérieur de la bande de roulement 22, une armature de travail 38 agencée radialement à l'intérieur de l'armature de protection 36 et une armature additionnelle 40 agencée radialement à l'intérieur de l'armature de travail 38. L'armature de protection 36 est ainsi radialement intercalée entre la bande de roulement 22 et l'armature de travail 38. L'armature de travail 38 est radialement intercalée entre l'armature de protection 36 et l'armature additionnelle 40.

L'armature de protection 36 comprend des première et deuxième nappes de protection 42, 44 comprenant des câbles métalliques de protection, la première nappe 42 étant agencée radialement à l'intérieur de la deuxième nappe 44. De façon optionnelle, les câbles métalliques de protection font un angle au moins égal à 10°, de préférence allant de 10° à 35° et préférentiellement de 15° à 30° avec la direction circonférentielle Z du pneumatique.

L'armature de travail 38 comprend des première et deuxième nappes de travail 46, 48, la première nappe 46 étant agencée radialement à l'intérieur de la deuxième nappe 48. Chaque nappe 46, 48 comprend au moins un câble 50. De façon optionnelle, les câbles métalliques 50 de travail sont croisés d'une nappe de travail à l'autre et font un angle au plus égal à 60°, de préférence allant de 15° à 40° avec la direction circonférentielle Z du pneumatique.

L'armature additionnelle 40, également appelée bloc limiteur, dont la fonction est de reprendre en partie les sollicitations mécaniques de gonflage, comprend, par exemple et de façon connue en soi, des éléments de renfort métalliques additionnels, par exemple tels que décrits dans FR 2 419 181 ou FR 2 419 182 faisant un angle au plus égal à 10°, de préférence allant de 5° à 10° avec la direction circonférentielle Z du pneumatique 10.

## EXEMPLE DE PRODUIT RENFORCE SELON L'INVENTION

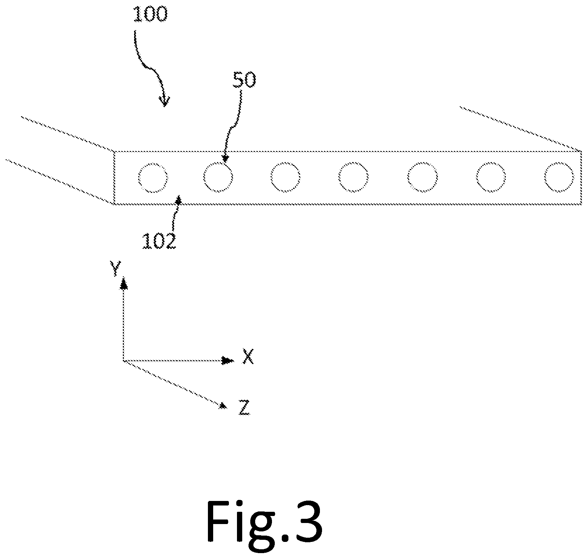

On a représenté sur la figure 3 un produit renforcé selon l'invention et désigné par la référence générale 100. Le produit renforcé 100 comprend au moins un câble 50, en l'espèce plusieurs câbles 50, noyés dans la matrice élastomérique 102.

Sur la figure 3, on a représenté la matrice élastomérique 102, les câbles 50 dans un repère X, Y, Z dans lequel la direction Y est la direction radiale et les directions X et Z sont les directions axiale et circonférentielle. Sur la figure 3, le produit renforcé 100 comprend plusieurs câbles 50 agencés côte à côte selon la direction principale X et s'étendant parallèlement les uns aux autres au sein du produit renforcé 100 et noyés collectivement dans la matrice élastomérique 102.

## CABLE SELON UN PREMIER MODE DE REALISATION DE L'INVENTION

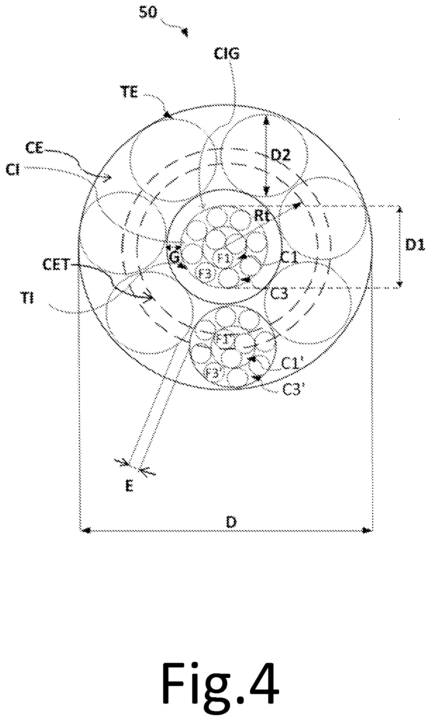

On a représenté sur la figure 4 le câble 50 selon un premier mode de réalisation de l'invention.

Le câble 50 est métallique et du type multi-torons à deux couches cylindriques. Ainsi, on comprend que les couches de torons constituant le câble 50 sont au nombre de deux, ni plus, ni moins.

Le câble 50 comprend une couche interne CI du câble constituée de $K\geq1$ toron(s) interne(s) TI. En l'espèce, K=1, 2, 3 ou 4, de préférence K=1, 2 ou 3 et plus préférentiellement K=1 ou 2, ici K=1. La couche interne CI est entourée d'une composition élastomérique présentant une épaisseur G formant alors la couche interne gainée CIG. La couche externe CE est constituée de L>Lmax torons externes TE enroulés autour de la couche interne gainée CIG du câble. Lmax=EN($\pi$/ arctan[(D2/2)$^2$/((Rt$^2$-(D2/2)$^2$) $\times$ cos$^2\alpha$t))]$^{1/2}$)=EN($\pi$/ arctan[(1,45/2)$^2$/((1,68$^2$-(1,45/2)$^2$) $\times$ cos$^2$(8,6 $\times\pi$/180)))]$^{1/2}$)= EN(6,55)=6. En l'espèce, L=7, 9,10 ou 11, de préférence L=7, 9 ou 10 et plus préférentiellement L=7 ou 10 et L=Lmax +1=6+1=7.

Le câble 50 comprend également une frette F non représentée constituée d'un unique fil de frette.

### Torons internes TI du câble 50

Chaque toron interne TI est à deux couches et comprend une couche interne C1 constituée de Q= 2, 3 ou 4 fils métalliques internes F1 et une couche externe C3 constituée de N fils métalliques externes F3 enroulés autour de la couche interne C1.

Ici Q=3.

N =7, 8, 9 ou 10, ici N=8.

La couche externe C3 de chaque toron interne TI est désaturée . Etant désaturée, la distance interfils I3 de la couche externe C3 séparant en moyenne les N fils externes est supérieure ou égale à 5 $\mu$m. La distance interfils de la couche externe de chaque toron interne est supérieure ou égale à 15 $\mu$m, plus préférentiellement supérieure ou égale à 35 $\mu$m, encore plus préférentiellement supérieure ou égale à 50 $\mu$m et très préférentiellement supérieure ou égale à 60 $\mu$m et ici I3 est égal à 66 $\mu$m. La somme SI3 des distances interfils I3 de la couche externe de chaque toron interne est supérieure ou égale au diamètre d3 des fils externes de la couche externe. Ici SI3=0,53 mm, valeur supérieure à d3=0,35mm.

Chaque fil interne et externe de chaque toron interne TI présente respectivement un diamètre d1 et d3. Chaque diamètre des fils interne d1 et externes d3 de chaque toron interne TI va de 0,10 mm à 0,60 mm, de préférence de 0,12 mm à 0,50 mm et plus préférentiellement de 0,15 mm à 0,42 mm. Ici d1=d3=0,35mm.

### Torons externes TE du câble 50

Chaque toron externe TE est à deux couches et comprend une couche interne C1' constituée de Q'= 2, 3 ou 4 fils métalliques internes F1' et une couche externe C3' constituée de N' fils métalliques externes F3' enroulés autour de la couche interne C1'.

Ici Q'=3.

N' =7, 8, 9 ou 10, ici N'=8.

La couche externe C3' de chaque toron externe TE est désaturée. La distance interfils de la couche externe de chaque toron externe est supérieure ou égale à 15 $\mu$m, plus préférentiellement supérieure ou égale à 35 $\mu$m, encore plus préférentiellement supérieure ou égale à 50 $\mu$m et très préférentiellement supérieure ou égale à 60 $\mu$m et ici I3' est égal à 66 $\mu$m.

La somme SI3' des distances interfils I3' de la couche externe de chaque toron externe est supérieure ou égale au diamètre d3' des fils externes de la couche externe. Ici SI3'=0,53 mm, valeur supérieure à d3'=0,35mm.

Chaque fil interne et externe de chaque toron externe TE présente respectivement un diamètre d1' et d3'. Chaque diamètre des fils interne d1' et externes d3' de chaque toron externe TE va de 0,10 mm à 0,60 mm, de préférence de 0,12 mm à 0,50 mm et plus préférentiellement de 0,14 mm à 0,42 mm. Ici d1'=d3'=0,35mm.

Le câble 50 est tel que Q=3 et N=8, chaque fil métallique interne F1 de chaque toron interne TI présente un diamètre d1 égal au diamètre d3 de chaque fil externe F3 de chaque toron interne TI ; Q'= 3 et N'=8, chaque fil métallique interne (F1') de chaque toron externe (TE) présente un diamètre d1' égal au diamètre d3' de chaque fil externe (F3') de chaque toron externe (TE) ; et d1=d3=d1'=d3'. Ici d1=d3=d1'=d3'=0,35 mm.

La couche externe CE du câble est saturée. La distance inter-torons des torons externes est inférieure strictement à 30 $\mu$m et ici est égale à 0 $\mu$m.

Le diamètre D1 du toron interne TI est égal au diamètre D2 de chaque toron externe TE. Ici, D1=D2=1,45 mm.

Chaque fil présente une résistance à la rupture, notée Rm, telle que $2500 \leq Rm \leq 3100$ MPa. On dit de l'acier de ces fils qu'il est de grade SHT (« Super High Tensile »). D'autres fils peuvent être utilisés, par exemple des fils de grade inférieur, par exemple de grade NT (« Normal Tensile ») ou HT (« High Tensile »), comme des fils de grade supérieur, par exemple de grade UT (« Ultra Tensile ») ou MT (« Mega Tensile »).

## PROCEDE DE FABRICATION DU CABLE SELON L'INVENTION

On fabrique le câble selon l'invention grâce à un procédé comprenant des étapes bien connues de l'homme du métier.

Chaque toron interne précédemment décrit est fabriqué selon des procédés connus comportant les étapes suivantes, opérées préférentiellement en ligne et en continu :

- tout d'abord, une première étape d'assemblage par câblage des Q=2, 3 ou 4 fils internes F1 de la couche interne C1 au pas p1 et dans le sens Z pour former la couche interne C1 en un premier point d'assemblage ;
- suivie d'une deuxième étape d'assemblage par câblage ou retordage des N fils externes F3 autour des Q fils internes F1 de la couche interne C1 au pas p3 et dans le sens Z pour former la couche externe C3 en un deuxième point d'assemblage;
- préférentiellement une étape d'équilibrage final des torsions.

Chaque toron externe précédemment décrit est fabriqué selon des procédés connus comportant les étapes suivantes, opérées préférentiellement en ligne et en continu:

- tout d'abord, une première étape d'assemblage par câblage des Q'= 2, 3 ou 4 fils internes F1' de la couche interne C1' au pas p1' et dans le sens Z pour former la couche interne C1' en un premier point d'assemblage ;
- suivie d'une deuxième étape d'assemblage par câblage ou retordage des N' fils externes F3' autour des Q' fils internes F1' de la couche interne C1' au pas p3' et dans le sens Z pour former la couche externe C3' en un deuxième point d'assemblage;
- préférentiellement une étape d'équilibrage final des torsions.

Par « équilibrage de torsion », on entend ici de manière bien connue de l'homme du métier l'annulation des couples de torsion résiduels (ou du retour élastique de de torsion) s'exerçant sur chaque fil du toron, dans la couche intermédiaire comme dans la couche externe.

Apres cette étape ultime d'équilibrage de la torsion, la fabrication du toron est terminée. Chaque toron est enroulé sur une ou plusieurs bobines de réception, pour stockage, avant l'opération ultérieure d'assemblage par câblage des torons élémentaires pour l'obtention du câble multi-torons.

Dans une étape de fabrication de la couche interne CI, on assemble par câblage les K torons internes TI au pas pi et dans le sens Z pour former la couche interne CI en un premier point d'assemblage.

Dans une étape de fabrication de la couche interne gainée CIG, on entoure la couche interne CI d'une composition élastomérique présentant une épaisseur G puis on assemble par câblage les L torons externes TE autour de la couche interne CIG au pas pe et dans le sens Z pour former l'assemblage des couches CIG et CE, avec L étant strictement supérieur à Lmax qui est le nombre maximum de torons externes TE pouvant être disposés sur la couche externe théorique CET obtenue lorsque la couche interne CI est directement au contact de la couche externe théorique CET.

En l'espèce, L>Lmax =6, ici L=7.

L'épaisseur G de la gaine de composition élastomérique est strictement supérieure à 0 mm, de préférence supérieure ou égale à 0,04 mm et plus préférentiellement supérieure ou égale à 0,12 mm et l'épaisseur G est inférieure ou égale à 0,80 mm, de préférence inférieure ou égale à 0,60 mm et plus préférentiellement inférieure ou égale à 0,52 mm. Ici, G=0,24 mm.

La composition élastomérique comprend un système de vulcanisation, une charge et un élastomère diénique.

On utilise comme composition élastomérique, une composition d'élastomère(s) diénique(s) conventionnelle pour pneumatique, à base de caoutchouc naturel (peptisé) et de noir de carbone N330 (65 pce), comportant en outre les additifs usuels suivants: soufre (7 pce), accélérateur sulfénamide (1 pce), ZnO (8 pce), acide stéarique (0,7 pce), antioxydant (1,5 pce), naphténate de cobalt (1,5 pce) (pce signifiant parties en poids pour cent parties d'élastomère) ; le module E10 de la composition élastomérique d'enrobage est de 10 MPa environ.

Eventuellement, dans une dernière étape d'assemblage, on enroule la frette F au pas pf dans le sens S autour de l'assemblage précédemment obtenu.

Le câble est ensuite incorporé par calandrage à des tissus composites formés d'une composition connue à base de caoutchouc naturel et de noir de carbone à titre de charge renforçante, utilisée conventionnellement pour la fabrication des armatures de sommet de pneumatiques radiaux. Cette composition comporte essentiellement, en plus de l'élastomère et de la charge renforçante (noir de carbone), un antioxydant, de l'acide stéarique, une huile d'extension, du naphténate de cobalt en tant que promoteur d'adhésion, enfin un système de vulcanisation (soufre, accélérateur, ZnO).

Les tissus composites renforcés par ces câbles comportent une matrice de composition élastomérique formée de deux couches fines de composition élastomérique qui sont superposées de part et d'autre des câbles et qui présentent respectivement une épaisseur allant de 1 à 4 mm. Le pas de calandrage (pas de pose des câbles dans le tissu de composition élastomérique) va de 4 mm à 8 mm.

Ces tissus composites sont ensuite utilisés en tant que nappe de travail dans l'armature de sommet lors du procédé de fabrication du pneumatique, dont les étapes sont par ailleurs connues de l'homme du métier.

## CABLE SELON UN DEUXIEME MODE DE REALISATION DE L'INVENTION

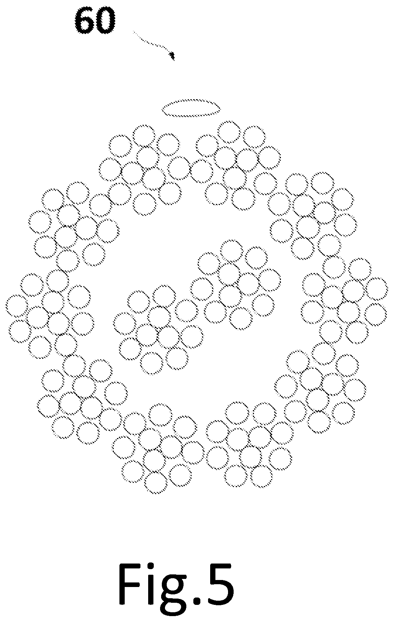

On a représenté sur la figure 5 un câble 60 selon un deuxième mode de réalisation de l'invention.

A la différence du premier mode de réalisation décrit précédemment, le câble 60 selon le deuxième mode de réalisation est tel que K=2 et L =10.

## CABLE SELON UN TROISIEME MODE DE REALISATION DE L'INVENTION

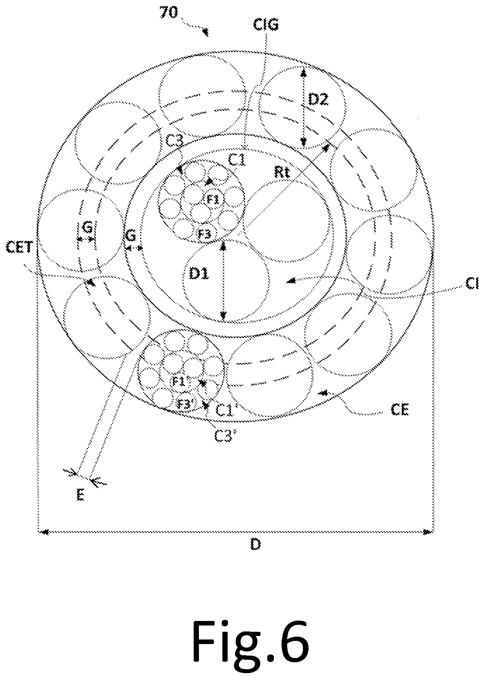

On a représenté sur la figure 6 un câble 70 selon un troisième mode de réalisation de l'invention. Les éléments analogues au premier mode de réalisation sont désignés par des références identiques.

A la différence du premier mode de réalisation du câble 50 décrit précédemment, le câble 70 selon le troisième mode de réalisation est tel que K=3 et L=10.

## CABLE SELON UN QUATRIEME MODE DE REALISATION DE L'INVENTION

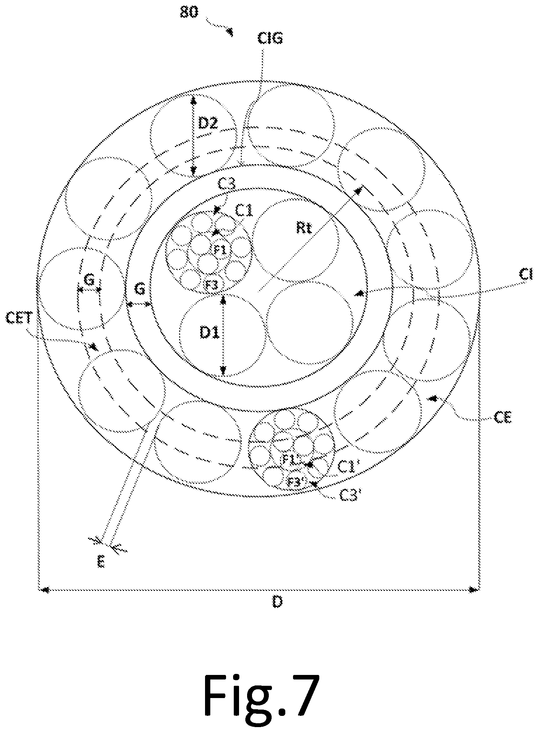

On a représenté sur la figure 7 un câble 80 selon un quatrième mode de réalisation de l'invention. Les éléments analogues au premier mode de réalisation sont désignés par des références identiques.

A la différence du premier mode de réalisation du câble 50 décrit précédemment, le câble 80 selon le quatrième mode de réalisation est tel que K=4 et L=11.

On a résumé dans le tableau 1 ci-dessous les caractéristiques pour les différents câbles 50, 60, 70 et 80.

**Tableau 1**

| Cables | | 50 | 60 | 70 | 80 |
|---|---|---|---|---|---|
| TI | Q/N | 3/8 | 3/8 | 3/8 | 3/8 |
| | d1/d3 | 0,35/0,35 | 0,35/0,35 | 0,35/0,35 | 0,35/0,35 |
| | sens C1/pas p1 (mm) | Z/ 7,7 | Z/ 7,7 | Z/ 7,7 | Z/ 7,7 |
| | sens C3/pas p3 (mm) | Z / 15,4 | Z / 15,4 | Z / 15,4 | Z / 15,4 |
| | I3($\mu$m) | 66/0,53 | 66/0,53 | 66/0,53 | 66/0,53 |
| Gaine | G(mm) | 0,24 | 0,21 | 0,09 | 0,14 |
| TE | Q'/N' | 3/8 | 3/8 | 3/8 | 3/8 |
| | d1/d3 | 0,35/0,35 | 0,35/0,35 | 0,35/0,35 | 0,35/0,35 |
| | sens C1'/pas p1' (mm) | Z/ 7,7 | Z/ 7,7 | Z/ 7,7 | Z/7,7 |
| | sens C3'/pas p3' (mm) | Z / 15,4 | Z / 15,4 | Z / 15,4 | Z / 15,4 |
| | I3' ($\mu$m) | 66/0,53 | 66/0,53 | 66/0,53 | 66/0,53 |
| Sens câble/pi/pe | | S/ inf / 70 | SS 40/80 | SS 40/80 | SS 40/80 |
| D1 | | 1,45 | 1,45 | 1,45 | 1,45 |
| D2 | | 1,45 | 1,45 | 1,45 | 1,45 |
| D1/D2 | | 1 | 1 | 1 | 1 |
| $\alpha$t (degré) | | 8,6 | 10,6 | 10,6 | 11,6 |

(suite)

| Sens câble/pi/pe | S/ inf / 70 | SS 40/80 | SS 40/80 | SS 40/80 |
|---|---|---|---|---|
| Rt (mm) | 1,68 | 2,38 | 2,38 | 2,62 |
| K | 1 | 2 | 3 | 4 |
| L | 7 | 10 | 10 | 11 |
| Lmax | 6 | 9 | 9 | 10 |
| D (mm) | 4,81 | 6,20 | 6,20 | 6,68 |
| E ($\mu$m) | 0 | 0 | 0 | 0 |

## TESTSCOMPARATIFS

## TESTS DE RESISTANCE A LA RUPTURE

Ce test permet de déterminer la résistance à la rupture des câbles testés, par mesure de la force à la rupture notée Fm (charge maximale en N) effectuée en traction selon la norme ISO 6892-1 d'octobre 2009.

On a résumé dans le tableau 2, les caractéristiques du câble témoin T1 et d'un câble comparatif C1 non conforme à l'invention.

**Tableau 2**

| | Câbles | T1 | C1 |
|---|---|---|---|
| TI | Q/N | 3/8 | 3/8 |
| | d1/d3 | 0,35/0,35 | 0,35/0,35 |
| | sens C1/pas p1 (mm) | Z/ 7,7 | Z/ 7,7 |
| | sens C3/pas p3 (mm) | Z/15,4 | Z/15,4 |
| | I3($\mu$m) | 66/0,53 | 66/0,53 |
| Gaine | G(mm) | 0 | 0,13 |
| TE | Q'/N' | 3/8 | 3/8 |
| | d1'/d3' | 0,35/0,35 | 0,35/0,35 |
| | sens C1'/pas p1' (mm) | Z/ 7,7 | Z/ 7,7 |
| | sens C3'/pas p3' (mm) | Z / 15,4 | Z / 15,4 |
| | I3'($\mu$m) | 66/0,53 | 66/0,53 |
| | D1 | 1,45 | 1,45 |
| | D2 | 1,45 | 1,45 |
| | D1/D2 | 1 | 1 |
| | K | 1 | 1 |
| | L | 6 | 6 |
| | Lmax | 6 | 6 |
| | D (mm) | 4,36 | 4,60 |
| | E ($\mu$m) | 0 | 116 |

On a résumé dans le tableau 3 ci-dessous les résultats au test de force à rupture pour le câble témoin T1, le câble comparatif C1 et le câble 50 selon l'invention. Les résultats à ces tests sont donnés en base 100. Ainsi, un résultat supérieur à 100 à l'un ou l'autre de ces tests signifie que le câble testé présente une force à rupture supérieure au câble témoin. Dans le même tableau, on aussi comparé la force à rupture rapportée au diamètre.

**Tableau 3**

| Câbles | T1 | C1 | 50 |
|---|---|---|---|
| K/L | 1/6 | 1/6 | 1/7 |
| Q/N/Q'/N' | 3/8/3/8 | 3/8/3/8 | 3/8/3/8 |
| Force à rupture (base 100 T1) en N | 100 | 105 | 124 |
| Force à rupture rapportée au diamètre (base 100 T1) en N/mm | 100 | 105 | 111 |

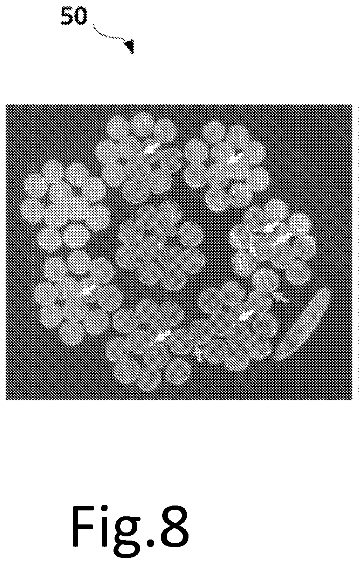

On note que le câble 50 selon l'invention présente une force rupture significativement supérieure à celle du câble témoin T1 et meilleure par rapport au câble comparatif C1. On aurait pu s'attendre de par la présence d'un toron supplémentaire sur la couche externe à une augmentation de 1/7 soit 14% de la force à rupture. Ici, pour le câble selon l'invention, on a une augmentation de 24%. On constate d'ailleurs sur la figure 8, cet effet voûte autour de la couche interne permettant d'ajouter un toron supplémentaire.

Et, on constate aussi que la force à rupture du câble rapportée au diamètre selon l'invention est nettement améliorée par rapport au câble témoin T1 et améliorée par rapport au câble comparatif C1.

Bien entendu, l'invention n'est pas limitée aux exemples de réalisation précédemment décrits.

Pour des raisons de faisabilité industrielle, de coût et de performance globale, on préfère mettre en oeuvre l'invention avec des fils linéaires, c'est-à-dire droit, et de section transversale conventionnelle circulaire.

On pourra également combiner les caractéristiques des différents modes de réalisation décrits ou envisagés ci-dessus sous réserve que celles-ci soient compatibles entre elles.

**Revendications**

**1.** Câble (50) multi-torons à deux couches comprenant:

- une couche interne (CI) du câble constituée de K≥1 toron(s) interne(s) (TI), le ou chaque toron interne (TI) étant à deux couches (C1, C3) et comprenant :

• une couche interne (C1) constituée de Q fils métalliques internes (F1), et
• une couche externe (C3) constituée de N fils métalliques externes (F3) enroulés autour de la couche interne (C1),

- une couche externe (CE) du câble constituée de L>1 torons externes (TE) enroulés autour de la couche interne (CI) du câble, chaque toron externe (TE) étant à deux couches (C1', C3') et comprenant :

• une couche interne (C1') constituée de Q' fils métalliques internes (F1'), et
• une couche externe (C3') constituée de N' fils métalliques externes (F3') enroulés autour de la couche interne (C1'),
**caractérisé en ce que**

- le câble (50) est obtenu par un procédé comprenant une étape de fabrication de la couche interne gainée (CIG) dans laquelle on entoure la couche interne (CI) d'une composition élastomérique présentant une épaisseur G puis des L torons externes pour former la couche externe (CE), avec L étant strictement supérieur à Lmax qui est le nombre maximum de torons externes (TE) pouvant être disposés sur la couche externe théorique (CET) obtenue lorsque la couche interne (CI) est directement au contact de la couche externe théorique (CET).

**2.** Câble (50) selon la revendication précédente, dans lequel L= Lmax+1 ou L= Lmax+2 et de préférence L=Lmax+1.

**3.** Câble (50) selon l'une quelconque des revendications précédentes, dans lequel le diamètre D1 du ou de chaque toron interne (TI) est égal au diamètre D2 de chaque toron externe (TE).

**4.** Câble (50) selon l'une quelconque des revendications précédentes, dans lequel la couche externe (CE) du câble est saturée de sorte que la distance inter-torons des torons externes soit inférieure strictement à 20 $\mu$m.

5.  Câble (50) selon l'une quelconque des revendications précédentes, dans lequel l'épaisseur G de la gaine de composition élastomérique est strictement supérieure à 0 mm, de préférence supérieure ou égale à 0,04 mm et plus préférentiellement supérieure ou égale à 0,12 mm.

6.  Câble (50) selon l'une quelconque des revendications précédentes, dans lequel l'épaisseur G de la gaine de composition élastomérique est inférieure ou égale à 0,80 mm, de préférence inférieure ou égale à 0,60 mm et plus préférentiellement inférieure ou égale à 0,52 mm.

7.  Câble (50) selon l'une quelconque des revendications précédentes, dans lequel la gaine de composition élastomérique comprend un élastomère choisi dans le groupe constitué par les polybutadiènes, le caoutchouc naturel, les polyisoprènes de synthèse, les copolymères de butadiène, les copolymères d'isoprène, et les mélanges de ces élastomères.

8.  Câble (50) selon l'une quelconque des revendications précédentes, dans lequel K=1, 2, 3 ou 4, de préférence K=1, 2 ou 3 et plus préférentiellement K=1 ou 2.

9.  Câble (50) selon l'une quelconque des revendications précédentes, dans lequel L=7, 9,10 ou 11, de préférence L=7, 9 ou 10 et plus préférentiellement L=7 ou 10.

10. Câble (50) selon l'une quelconque des revendications précédentes, dans lequel la couche externe (C3') de chaque toron externe (TE) est désaturée de sorte que la distance interfils I3' soit supérieure ou égale à 5 $\mu$m.

11. Câble (50) selon l'une quelconque des revendications précédentes, dans lequel la couche externe (C3) de chaque toron interne (TI) est désaturée de sorte que la distance interfils I3 soit supérieure ou égale à 5 $\mu$m.

12. Câble (50) selon l'une quelconque des revendications précédentes, dans lequel :

    - Q=3 et N=8,
    - chaque fil interne (F1) du ou de chaque toron interne (TI) présente un diamètre d1 égal au diamètre d3 de chaque fil métallique externe (F3) du ou de chaque toron interne (TI),
    - Q'= 3 et N'=8,
    - chaque fil interne (F1') de chaque toron externe (TE) présente un diamètre d1' égal au diamètre d3' de chaque fil métallique externe (F3') de chaque toron externe (TE), et
    - d1=d3=d1'=d3'.

13. Câble (50) selon l'une quelconque des revendications précédentes, dans lequel chaque fil métallique présente respectivement un diamètre d1, d1', d3, d3' allant de 0,10 mm à 0,60 mm, de préférence de 0,12 mm à 0,50 mm et plus préférentiellement de 0,15 mm à 0,42 mm.

14. Produit renforcé (100), **caractérisé en ce qu'**il comprend une matrice élastomérique (102) et au moins un câble (50) selon l'une quelconque des revendications 1 à 13.

15. Pneumatique (10), **caractérisé en ce qu'**il comprend au moins un câble (50) selon l'une quelconque des revendications 1 à 13 ou un produit renforcé selon la revendication 14.


**Patentansprüche**

1.  Mehrlitziges (50) Seil mit zwei Lagen, umfassend:

    - eine innere Lage (CI) des Seils, die aus K≥1 inneren Litze(n) (TI) besteht, wobei die oder jede innere Litze (TI) zwei Lagen (C1, C2) hat und umfasst:

        • eine innere Lage (C1), die aus Q inneren Metalldrähten (F1) besteht, und
        • eine äußere Lage (C2), die aus N äußeren Metalldrähten (F3) besteht, die um die innere Lage (C1) gewunden sind,

    - eine äußere Lage (CE) des Seils, die aus L>1 äußeren Litzen (TE) besteht, die um die innere Lage (CI) des Seils gewunden sind, wobei jede äußere Litze (TE) zwei Lagen (C1', C3') hat und umfasst:

- eine innere Lage (C1'), die aus Q' inneren Metalldrähten (F1') besteht, und
- eine äußere Lage (C3'), die aus N' äußeren Metalldrähten (F3') besteht, die um die innere Lage (C1') gewunden sind,

**dadurch gekennzeichnet, dass**

- das Seil (50) mit einem Verfahren erhalten wird, das einen Schritt der Fertigung der ummantelten inneren Lage (CIG) umfasst, bei dem die innere Lage (CI) mit einer Elastomerzusammensetzung umgeben wird, die eine Dicke G aufweist, dann mit den L äußeren Litzen, um die äußere Lage (CE) zu bilden, wobei L strikt größer als Lmax ist, das die maximale Anzahl von äußeren Litzen (TE) ist, die auf der theoretischen äußeren Lage (CET) angeordnet werden können, die erhalten wird, wenn die innere Lage (CI) direkt in Kontakt mit der theoretischen äußeren Lage (CET) ist.

2. Seil (50) nach dem vorhergehenden Anspruch, bei dem L= Lmax+1 oder L= Lmax+2 und bevorzugt L=Lmax+1.

3. Seil (50) nach einem der vorhergehenden Ansprüche, bei dem der Durchmesser der oder jeder inneren Litze (TI) gleich dem Durchmesser D2 jeder äußeren Litze (TE) ist.

4. Seil (50) nach einem der vorhergehenden Ansprüche, bei dem die äußere Lage (CE) des Seils gesättigt ist, so dass der Zwischenlitzenabstand der äußeren Litzen strikt kleiner als 20 $\mu$m ist.

5. Seil (50) nach einem der vorhergehenden Ansprüche, bei dem die Dicke G des Mantels aus Elastomerzusammensetzung strikt größer als 0 mm, bevorzugt größer als oder gleich 0,04 mm und noch bevorzugter größer als oder gleich 0,12 mm ist.

6. Seil (50) nach einem der vorhergehenden Ansprüche, bei dem die Dicke G des Mantels aus Elastomerzusammensetzung kleiner als oder gleich 0,80 mm, bevorzugt kleiner als oder gleich 0,60 mm und noch bevorzugter kleiner als oder gleich 0,52 mm ist.

7. Seil (50) nach einem der vorhergehenden Ansprüche, bei dem der Mantel aus Elastomerzusammensetzung ein Elastomer umfasst, das aus der Gruppe gewählt ist, die aus den Polybutadienen, dem Naturkautschuk, den synthetischen Polyisoprenen, den Butadien-Copolymeren, den Isopren-Copolymeren und den Mischungen dieser Elastomere besteht.

8. Seil (50) nach einem der vorhergehenden Ansprüche, bei dem K=1, 2, 3 oder 4, bevorzugt K=1, 2 oder 3 und noch bevorzugter K=1 oder 2.

9. Seil (50) nach einem der vorhergehenden Ansprüche, bei dem L=7, 9, 10 oder 11, bevorzugt L=7, 9 oder 10 und noch bevorzugter L=7 oder 10.

10. Seil (50) nach einem der vorhergehenden Ansprüche, bei dem die äußere Lage (C3') jeder äußeren Litze (TE) ungesättigt ist, so dass der Zwischendrahtabstand 13' größer als oder gleich 5 $\mu$m ist.

11. Seil (50) nach einem der vorhergehenden Ansprüche, bei dem die äußere Lage (C3) jeder inneren Litze (TI) ungesättigt ist, so dass der Zwischendrahtabstand 13 größer als oder gleich 5 $\mu$m ist.

12. Seil (50) nach einem der vorhergehenden Ansprüche, bei dem:

- Q=3 und N=8,
- jeder innere Draht (F1) der oder jeder inneren Litze (TI) einen Durchmesser d1 gleich dem Durchmesser d3 jedes äußeren Metalldrahts (F3) der oder jeder inneren Litze (TI) aufweist,
- Q'= 3 und N'=8,
- jeder innere Draht (F1') jeder äußeren Litze (TE) einen Durchmesser d1' gleich dem Durchmesser d3' jedes äußeren Metalldrahts (F3') jeder äußeren Litze (TE) aufweist und
- d1=d3=d1'=d3'.

13. Seil (50) nach einem der vorhergehenden Ansprüche, bei dem jeder Metalldraht jeweils einen Durchmesser d1, d1', d3, d3' zwischen 0,10 mm und 0,60 mm, bevorzugt zwischen 0,12 mm und 0,50 mm und noch bevorzugter zwischen 0,15 mm und 0,42 mm aufweist.

14. Verstärktes Produkt (100), **dadurch gekennzeichnet, dass** es eine Elastomermatrix (102) und mindestens ein Seil (50) nach einem der Ansprüche 1 bis 13 umfasst.

15. Reifen (10), **dadurch gekennzeichnet, dass** er mindestens ein Seil (50) nach einem der Ansprüche 1 bis 13 oder ein verstärktes Produkt nach Anspruch 14 umfasst.

**Claims**

1. Two-layer multi-strand cord (50), comprising:

   - an internal layer (CI) of the cord made up of K≥1 internal strand(s) (TI), the or each internal strand (TI) being a two-layer (C1, C3) strand and comprising:

     • an internal layer (C1) made up of Q internal metallic threads (F1), and
     • an external layer (C3) made up of N external metallic threads (F3) wound around the internal layer (C1),

   - an external layer (CE) of the cord made up of L>1 external strands (TE) wound around the internal layer (CI) of the cord, each external strand (TE) being a two-layer (C1', C3') strand and comprising:

     • an internal layer (C1') made up of Q' internal metallic threads (F1'), and
     • an external layer (C3') made up of N' external metallic threads (F3') wound around the internal layer (C1'),

   **characterized in that :**

   - the cord (50) is obtained by a method comprising a step of manufacturing the sheathed internal layer (CIG) in which step the internal layer (CI) is surrounded with an elastomeric composition having a thickness G and then by the L external strands to form the external layer (CE), where L is strictly greater than Lmax which is the maximum number of external strands (TE) that can be laid on the theoretical external layer (CET) obtained when the internal layer (CI) is directly in contact with the theoretical external layer (CET).

2. Cord (50) according to the preceding claim, wherein L= Lmax+1 or L= Lmax+2 and preferably L=Lmax+1.

3. Cord (50) according to either one of the preceding claims, wherein the diameter D1 of the or of each internal strand (TI) is equal to the diameter D2 of each external strand (TE).

4. Cord (50) according to any one of the preceding claims, wherein the external layer (CE) of the cord is saturated so that the inter-strand distance of the external strands is strictly less than 20 $\mu$m.

5. Cord (50) according to any one of the preceding claims, wherein the thickness G of the sheath of elastomeric composition is strictly greater than 0 mm, preferably greater than or equal to 0.04 mm, and more preferably greater than or equal to 0.12 mm.

6. Cord (50) according to any one of the preceding claims, wherein the thickness G of the sheath of elastomeric composition is less than or equal to 0.80 mm, preferably less than or equal to 0.60 mm, and more preferably less than or equal to 0.52 mm.

7. Cord (50) according to any one of the preceding claims, wherein the sheath of elastomeric composition comprises an elastomer selected from the group consisting of polybutadienes, natural rubber, synthetic polyisoprenes, butadiene copolymers, isoprene copolymers, and mixtures of these elastomers.

8. Cord (50) according to any one of the preceding claims, wherein K=1, 2, 3 or 4, and preferably K=1, 2 or 3 and more preferably K=1 or 2.

9. Cord (50) according to any one of the preceding claims, wherein L=7, 9, 10 or 11, and preferably L=7, 9 or 10 and more preferably L=7 or 10.

10. Cord (50) according to any one of the preceding claims, wherein the external layer (C3') of each external strand (TE) is desaturated so that the inter-thread distance I3' is greater than or equal to 5 $\mu$m.

11. Cord (50) according to any one of the preceding claims, wherein the external layer (C3) of each internal strand (TI) is desaturated so that the inter-thread distance I3 is greater than or equal to 5 $\mu$m.

12. Cord (50) according to any one of the preceding claims, wherein:

    - Q=3 and N=8,
    - each internal thread (F1) of the or of each internal strand (TI) has a diameter d1 equal to the diameter d3 of each external metallic thread (F3) of the or of each internal strand (TI),
    - Q'= 3 and N'=8,
    - each internal thread (F1') of each external strand (TE) has a diameter d1' equal to the diameter d3' of each external metallic thread (F3') of each external strand (TE), and
    - d1=d3=d1'=d3'.

13. Cord (50) according to any one of the preceding claims, wherein each metallic thread has a respective diameter d1, d1', d3, d3' ranging from 0.10 mm to 0.60 mm, preferably from 0.12 mm to 0.50 mm and more preferentially from 0.15 mm to 0.42 mm.

14. Reinforced product (100), **characterized in that** it comprises an elastomer matrix (102) and at least one cord (50) according to any one of the preceding Claims 1 to 13.

15. Tyre (10), **characterized in that** it comprises at least one cord (50) according to any one of Claims 1 to 13 or a reinforced product according to Claim 14.

# Fig.1

# Fig.2

Fig.3

# Fig.4

60

Fig.5

Fig.6

Fig.7

Fig.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016051669 A
- FR 2419181
- FR 2419182